# EUROPÄISCHE PATENTSCHRIFT

(11) **EP 1 304 489 B1**
(45) Veröffentlichungstag und Bekanntmachung des Hinweises auf die Patenterteilung: **10.08.2005**
(21) Anmeldenummer: 02022931.6
(22) Anmeldetag: 10.10.2002
(51) Int. Cl.: F16B 5/02

(54) **Toleranzausgleichsanordnung**
Tolerance compensating arrangement
Dispositif de compensation de tolérance

(30) Priorität: 18.10.2001 DE 10151383
(43) Veröffentlichungstag der Anmeldung: 23.04.2003
(73) Patentinhaber: Böllhoff GmbH, 33649 Bielefeld (DE)
(72) Erfinder: Kobusch, Klaus, 33613 Bielefeld (DE); Klaws, Kai-Uwe, 33813 Oerlinghausen (DE); Grubert, Klaus Friedrich, 31675 Bückeburg (DE)
(74) Vertreter: Wehnert, Werner, Dipl.-Ing.

(56) Entgegenhaltungen:
- EP-A- 0 176 663
- DE-A- 3 932 193
- DE-A- 19 910 510
- DE-A- 19 910 511
- FR-A- 2 795 782

## Beschreibung

Die vorliegende Erfindung betrifft eine Toleranzausgleichsanordnung zum selbsttätigen Ausgleich fertigungs- und/oder montagebedingter Toleranzen im Abstand zwischen einem ersten und einem zweiten Bauteil.

Es sind bereits zahlreiche Toleranzausgleichsanordnungen zum Ausgleich fertigungsbedingter Bauteiltoleranzen und/oder montagebedingter Toleranzen in der Vor- bzw. Endmontage von Baugruppen bekannt. Es sind auch bereits Toleranzausgleichanordnungen bekannt, bei denen der Toleranzausgleich ohne Einfluss des Monteurs, also selbsttätig erfolgt, um die Prozesszeit der Montage nicht zu verlängern. Verwiesen sei in diesem Zusammenhang beispielsweise auf die DE 100 04 697 A1, EP 0 176 663 A1 und EP 0 848 168 A1. Alle diese Toleranzausgleichsanordnungen erfordern jedoch vergleichsweise viele Einzelteile, was einen entsprechenden Fertigungsaufwand und damit relativ hohe Herstellungskosten bedingt.

Aus der DE 199 49 654 A1 ist eine Toleranzausgleichsanordnung mit einem Ausgleichselement bekannt, das aus einer inneren und einer äußeren Gewindehülse besteht, die ineinander schraubbar sind. Die äußere Gewindehülse ist über eine Buchse an dem ersten Bauteil festgelegt. Die innere Gewindehülse ist mit einem Reibwiderstand versehen, so dass die Schraube beim Einschrauben in die innere Gewindehülse diese mitdreht und aus der äußeren Gewindehülse in Einsteckrichtung herausdreht, bis sich die innere Gewindehülse an das zweite Bauteil anlegt. Die Schraube kann dann durch die innere Gewindehülse hindurch gesteckt und mit einer am zweiten Bauteil abgestützten Mutter gesichert werden. Diese Toleranzausgleichsanordnung erfordert somit zusätzlich zu der Schraube und der Mutter zwei Gewindehülsen und eine Gewindebuchse, so dass auch sie relativ aufwendig und teuer ist. Da ferner die Mutter nach erfolgtem Toleranzausgleich noch zusätzlich mit der Schraube verschraubt werden muss, ist das Erfordernis eines selbsttätigen Toleranzausgleichs nur teilweise erfüllt.

Aus der EP 0 533 513 A1 ist eine Toleranzausgleichsanordnung bekannt, die aus einer Schraube, einer als Blindnietmutter ausgebildeten Mutter, einer Ausgleichsbuchse und einer Gegenmutter besteht. Die Ausgleichsbuchse ist mit einem Innen- und einem Außengewinde versehen, so dass einerseits die Ausgleichsbuchse in die Mutter und andererseits die Schraube in die Ausgleichsbuchse einschraubbar ist. Zum Toleranzausgleich wird die Ausgleichsbuchse mittels eines Werkzeuges manuell aus der Mutter heraus gedreht, bis sie sich an das erste Bauteil anlegt, worauf dann die Ausgleichsbuchse mit der Gegenmutter gesichert wird und damit die beiden Bauteile verspannt werden. Ein selbsttätiger Toleranzausgleich ist bei dieser Ausgleichsanordnung nicht möglich, abgesehen davon, dass sie immer noch vergleichsweise viele Bauteile erfordert.

Eine Toleranzausgleichsanordnung nach dem Oberbegriff des Patentanspruchs 1 ist aus DE 199 10 511 A1 bekannt. Bei der dort offenbarten Toleranzausgleichsanordnung besteht der Klemmabschnitt der Ausgleichsbuchse aus einem ringförmigen Federelement, das in einen durchmesservergrößerten Abschnitt der Bohrung der Ausgleichsbuchse eingesetzt ist und radial einwärts ragende Nasen ausbildet, die als Reibschlussmittel wirken.

Der vorliegenden Erfindung liegt die Aufgabe zugrunde, eine konstruktiv einfache, aus möglichst wenig Einzelteilen bestehende Toleranzausgleichsanordnung zu schaffen, bei der der Toleranzausgleich beim Verspannen der beiden Bauteile selbsttätig, d. h. ohne zusätzlichen manuellen Eingriff einer Bedienungsperson, erfolgt.

Diese Aufgabe wird durch die im Patentanspruch 1 definierte Erfindung gelöst.

Die erfindungsgemäß ausgebildete Toleranzausgleichsanordnung besteht lediglich aus einer Schraube, einer Mutter und einer Ausgleichsbuchse, wobei allenfalls zusätzlich eine Beilagscheibe für den Kopf der Schraube vorgesehen wird. Die Schraube, die Mutter und die Ausgleichsbuchse sind so ausgebildet, dass sie eine rechtsgängige Gewindepaarung und eine linksgängige Gewindepaarung aufweisen. Ferner besitzt die Ausgleichsbuchse einen Klemmabschnitt, der mit der Schraube eine Reibschlussverbindung eingehen kann. Durch diese Maßnahmen wird erreicht, dass die Schraube beim Einschraubvorgang zunächst die Ausgleichsbuchse durch Reibschluss mitdreht und hierdurch entgegen der Einsteckrichtung aus der Mutter herausschraubt, bis sich die Ausgleichsbuchse nach erfolgtem Toleranzausgleich an das erste Bauteil anlegt, und dass dann die Schraube unter Überwindung des Reibschlusses direkt oder indirekt mit der Mutter verschraubt wird, um die beiden Bauteile miteinander zu verspannen.

Aufgrund der beiden gegensinnigen Gewindepaarungen und der mit dem erfindungsgemäßen Klemmabschnitt versehenen Reibschlussverbindung zwischen Ausgleichsbuchse und Schraube ist es gelungen, die Teilezahl der Toleranzausgleichsanordnung auf ein Minimum zu reduzieren, wobei gleichzeitig der Toleranzausgleich ohne zusätzliche Handhabungsschritte, d. h. selbsttätig, erfolgt. Die Teilereduzierung bei gleichzeitiger Gewährleistung der Funktion ermöglicht extrem niedrige Fertigungskosten, was die Toleranzausgleichsanordnung entsprechend wirtschaftlich macht.

Vorteilhafte Ausgestaltungen der Erfindung sind in den Unteransprüchen definiert.

Anhand der Zeichnungen werden Ausführungsbeispiele der Erfindung näher erläutert. Es zeigt:
Fig. 1 ein erstes Ausführungsbeispiel einer Toleranzausgleichsanordnung bei der Montage;
Fig. 2 eine der Fig. 1 entsprechende Ansicht nach erfolgter Montage;
Fig. 3 einen Längsschnitt durch die Ausgleichsbuchse der Toleranzausgleichsanordnung;
Fig. 4 einen Längsschnitt durch die Mutter der Toleranzausgleichsanordnung;
Fig. 5 eine zweite Ausführungsform einer Toleranzausgleichsanordnung bei der Montage;
Fig. 6 eine der Fig. 5 entsprechende Ansicht nach erfolgter Montage;
Fig. 7 einen Längsschnitt durch die Ausgleichsbuchse der Toleranzausgleichsanordnung der Fign. 5 und 6;
Fig. 8 einen Längsschnitt durch die Mutter der Toleranzausgleichsanordnung der Fign. 5 und 6;
Fig. 9 eine abgewandelte Ausführungsform der Mutter;
Fig. 10 eine weitere Ausführungsform der Mutter.

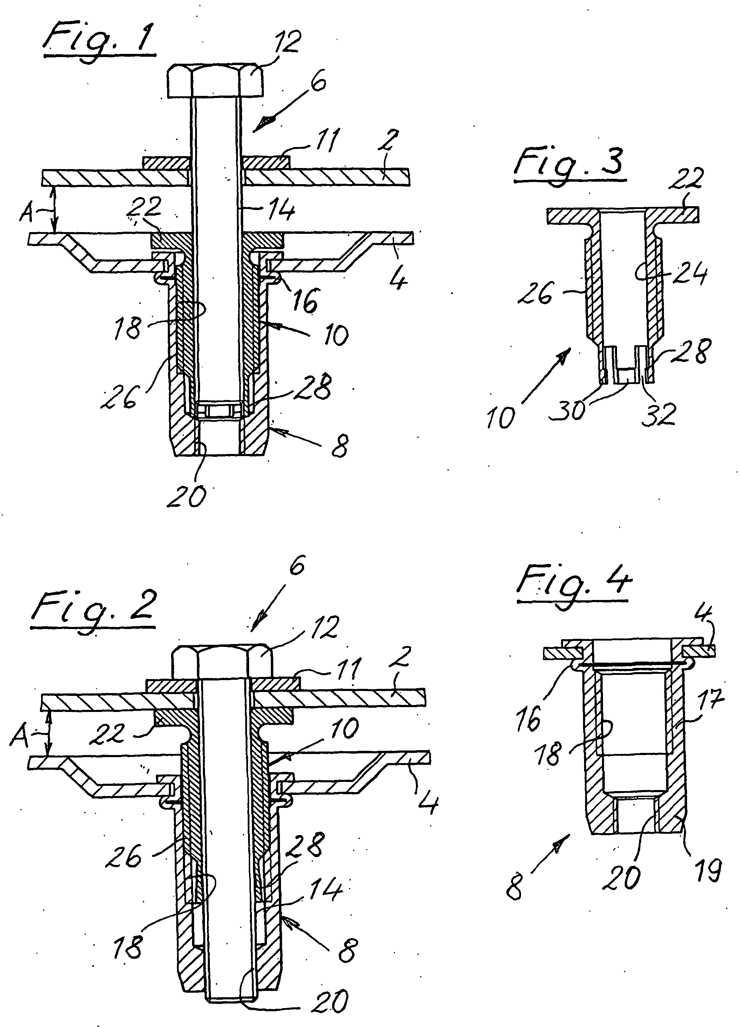

Die in den Fign.1 und 2 dargestellte Toleranzausgleichsanordnung dient zum Verspannen eines ersten Bauteils 2 und eines zweiten Bauteils 4 und gleichzeitigen Toleranzausgleich im Abstand A zwischen den beiden vormontierten Bauteilen 2 und 4. Der Abstand A zwischen den beiden Bauteilen 2 und 4 unterliegt Schwankungen aufgrund fertigungsbedingter Bauteiltoleranzen und/oder montagebedingter Toleranzen in der Vor- bzw. Endmontage, welche durch die zu beschreibende Toleranzausgleichsanordnung ausgeglichen werden.

Die Toleranzausgleichsanordnung besteht aus einer Schraube 6, einer Mutter 8 und einer Ausgleichsbuchse 10. Zusätzlich kann eine Beilagscheibe 11 für die Schraube 6 vorgesehen werden.

Die Schraube 6 ist eine übliche Schraube, z. B. eine genormte Schraube (DIN 933) mit einem Kopf 12 und einem rechtsgängigen Außengewinde 14.

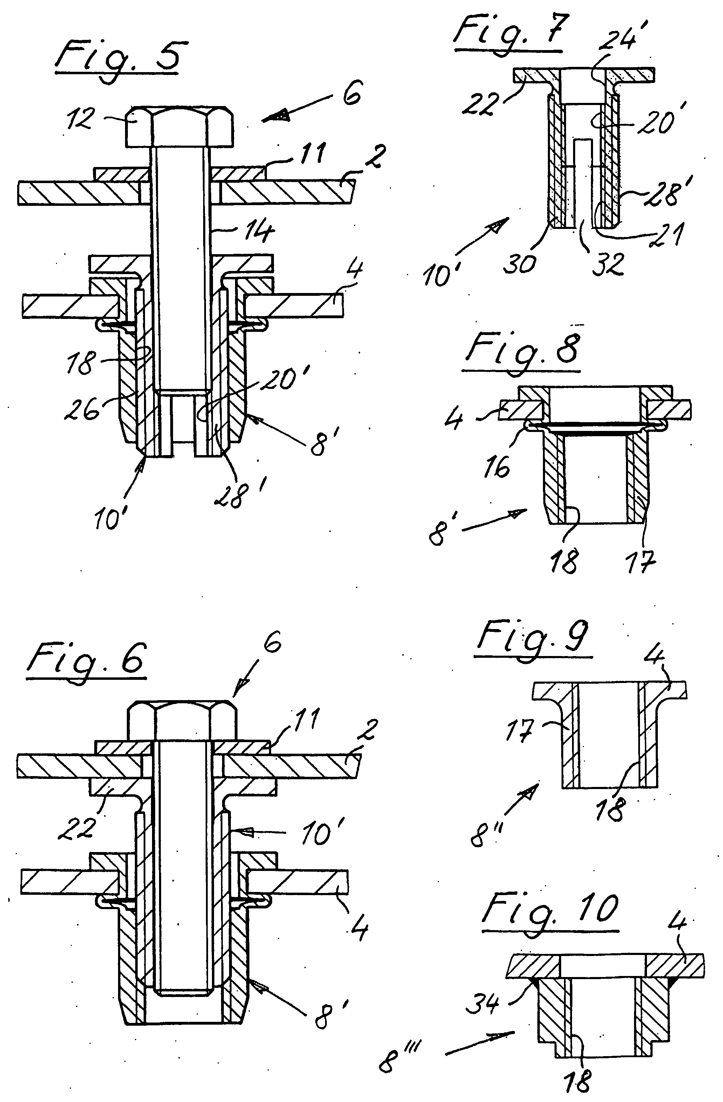

Die Mutter 8 (s. auch Fig. 4) ist im dargestellten Ausführungsbeispiel eine Blindnietmutter mit einem Stauchbereich 16, der bei einem Setzvorgang eine Wulst bildet und dadurch die Mutter 8 mit dem zweiten Bauteil 4 fest verbindet. Da ein derartiger Setzvorgang bekannt ist, wird er nicht weiter beschrieben. Die Mutter 8 hat einen ersten Gewindeabschnitt 17 mit einem linksgängigen Innengewinde 18 und einen axial dazu versetzten zweiten Gewindeabschnitt 19 mit einem rechtsgängigen Innengewinde 20, das passend zu dem rechtsgängigen Außengewinde 14 der Schraube 6 ausgebildet ist.

Die Ausgleichsbuchse 10 (s. Fig. 3) hat einen Buchsenkörper mit einem an einem Ende vorgesehenen Flansch 22, einer durchgehenden glatten Bohrung 24, einem linksgängigen Außengewinde 26, das passend zu dem linksgängigen Innengewinde 18 der Mutter 8 ausgebildet ist, sowie einem Klemmabschnitt 28. Der Klemmabschnitt 28 ist als elastisch aufweitbarer Federabschnitt ausgebildet, dessen Innendurchmesser kleiner als der Außendurchmesser der Schraube 6 ist. Genauer gesagt, besteht der Klemmabschnitt aus mehreren über den Umfang verteilten federnden Fingern 30, die durch längsverlaufende Schlitze 32 im Buchsenkörper gebildet sind. Die federnden Finger 30 haben kleine nach innen ragende Ansätze, die die Schraube 6 mit der Ausgleichsbuchse 10 durch Reibschluss verbinden, wenn die Schraube 6 in die Ausgleichsbuchse 10 eingesteckt wird. Wenn der Reibschluss überwunden wird, ist die Schraube 6 relativ zu der Ausgleichsbuchse 10 drehbar, wie im folgenden noch genauer erläutert wird.

Die Funktionsweise der Toleranzausgleichsanordnung ist wie folgt:

Zunächst wird die Mutter 8 mit dem zweiten Bauteil 4 durch den Stauchbereich 16 fest verbunden, und dann wird die Ausgleichsbuchse 10 in die Mutter 8 eingeschraubt. Wenn die Bauteile 2 und 4 mit gegenseitigem Abstand A vormontiert sind, wird die Schraube 6 durch zueinander ausgerichtete Löcher der Bauteile 2 und 4 in Einsteckrichtung so tief durch die Bohrung 24 der Ausgleichsbuchse 10 gesteckt, bis die Schraube 6 den Klemmabschnitt 28 der Ausgleichsbuchse 10 erreicht. Dies ist der in Fig. 1 dargestellte Zustand.

Wird nun die Schraube 6 mittels eines Schraubenschlüssels (nicht gezeigt) gedreht, so dreht sie die Ausgleichsbuchse 10 durch den Reibschluss zwischen dem Klemmabschnitt 28 und dem Außengewinde 14 der Schraube mit. Da das Außengewinde 26 der Ausgleichsbuchse 10 und das Innengewinde 18 der Mutter 8 als linksgängiges Gewinde (also gegensinnig zum rechtsgängigen Gewinde der Schraube 6) ausgebildet sind, wird die Ausgleichsbuchse 10 von der Schraube 6 entgegen der Einsteckrichtung aus der Mutter 8 heraus gedreht, bis sich die Ausgleichsbuchse 10 mit ihrem Flansch 22 an die Unterseite des ersten Bauteils 2 anlegt. Dieser Vorgang stellt den eigentlichen Toleranzausgleich dar.

Da nun die Ausgleichsbuchse 10 an dem ersten Bauteil 2 fest anliegt, kann sie von der Schraube 6 nicht mehr weiter gedreht werden. Die Schraube 6 kann daher unter Überwindung des Reibschlusses mit dem Innengewinde 20 der Mutter 8 in Eingriff gebracht und verschraubt werden. Wenn sich der Kopf 12 der Schraube 6 über die Beilagscheibe 11 am ersten Bauteil 2 abstützt, wird die Schraube 6 mit dem notwendigen Anziehdrehmoment angezogen, wodurch die beiden Bauteile 2, 4 im Abstand A miteinander verspannt werden.

Die in den Fign. 5 bis 8 dargestellte Ausführungsform der Toleranzausgleichsanordnung entspricht in ihrem grundsätzlichen Aufbau der vorhergehenden Ausführungsform, wobei sich entsprechende Teile mit denselben Bezugszeichen und abgewandelte Teile mit durch einen Apostroph ergänzten Bezugszeichen bezeichnet werden.

Die Ausführungsform der Fign. 5 bis 8 unterscheidet sich von der vorhergehenden Ausführungsform im wesentlichen nur dadurch, dass das mit der Schraube 6 zusammenwirkende rechtsgängige Innengewinde nicht an der Mutter, sondern an der Ausgleichsbuchse vorgesehen ist.

Die Mutter 8' (Fig. 8) hat daher im Gegensatz zu der Mutter 8 der Fig. 4 nur einen einzigen Gewindeabschnitt 17 mit einem linksgängigen Innengewinde 18, jedoch keinen zweiten Gewindeabschnitt 19; sie kann daher eine handelsübliche Blindnietmutter sein.

Andererseits ist die durchgehende Bohrung 24' der Ausgleichsbuchse 10' (siehe Fig. 7) über den größten Teil ihrer axialen Länge als Gewindebohrung ausgebildet, die als rechtsgängiges Innengewinde 20' dient, welches mit der Schraube 6 zum Verspannen der Bauteile 2, 4 verschraubbar ist. Der Klemmabschnitt 28' wird dadurch gebildet, dass das Innengewinde 20' im Bereich des Klemmabschnittes 28' einen kleineren Gewindedurchmesser 21 als im übrigen Bereich hat. Außerdem weist der Klemmabschnitt 28' wieder federnde Finger 30 auf, die durch Längsschlitze 32 im Buchsenkörper gebildet sind.

Die Funktionsweise dieser Ausführungsform ist im Prinzip die gleiche wie die der vorhergehenden Ausführungsform: Wenn die Mutter 8' durch den Setzvorgang mit dem zweiten Bauteil 4 fest verbunden ist, die Ausgleichsbuchse 10' in die Mutter 8' eingeschraubt ist und die Bauteile 2, 4 vormontiert sind, wird die Schraube 6 durch das Bauteil 2 hindurch in die Ausgleichsbuchse 10' eingesteckt, bis der kleinere Gewindeabschnitt 21 des Klemmabschnittes 28' der Ausgleichsbuchse 10 mit der Schraube 6 reibschlüssig verbunden ist (Fig. 5). Die Ausgleichsbuchse 10' wird dann mit Hilfe der Schraube 6 aus der Mutter 8' herausgedreht, bis sie an dem ersten Bauteil 2 anliegt. Hierauf kann die Schraube 6 unter Aufweitung des Klemmabschnittes 28' vollständig in die Ausgleichsbuchse 10' eingeschraubt werden. Wenn der Kopf 12 der Schraube 6 an der Beilagscheibe 11 anliegt, wird die Schraube 6 mit dem erforderlichen Drehmoment angezogen, um die beiden Bauteile 2 und 4 miteinander zu verspannen.

Wenn auch bei den beschriebenen Ausführungsformen die Gewindepaarung 14, 20 bzw. 14, 20' als rechtsgängig und die Gewindepaarung 18, 26 als linksgängig beschrieben wurden, versteht es sich jedoch, dass die Gangrichtungen dieser Gewindepaarungen auch umgekehrt sein könnten.

Ferner muss die Mutter nicht notwendigerweise als Blindnietmutter ausgebildet werden. Vielmehr kann die Mutter auch in anderer Weise mit dem zweiten Bauteil 4 fest verbunden werden. So kann die Mutter 8" mit dem zweiten Bauteil 4 einstückig ausgebildet sein, wie dies Fig. 9 zeigt. Als weitere Möglichkeit kann die Mutter 8''' als Schweißmutter ausgebildet werden, die über eine Schweißnaht 34 am zweiten Bauteil 4 festgelegt wird (Fig. 10). Andere bekannte Mutternarten sind ebenfalls möglich.

## Patentansprüche

1. Toleranzausgleichsanordnung zum selbsttätigen Ausgleich fertigungs- und/oder montagebedingter Toleranzen im Abstand (A) zwischen einem ersten und einem zweiten Bauteil (2, 4) mit
einer Schraube (6) mit einem Außengewinde (14) einer ersten Gangrichtung, die durch die beiden Bauteile (2, 4) hindurch steckbar und mit ihrem Kopf (12) an dem ersten Bauteil (2) abstützbar ist,
einer Mutter (8; 8'; 8"; 8''') mit einem Innengewinde (18) einer entgegengesetzten zweiten Gangrichtung, die mit dem zweiten Bauteil (4) fest verbunden ist, und
einer Ausgleichsbuchse (10; 10'), die eine durchgehende Bohrung (24), ein Außengewinde (26) der zweiten Gangrichtung passend zum Innengewinde (18) der Mutter sowie einen Klemmabschnitt (28) hat, der als elastisch aufweitbarer Federabschnitt ausgebildet ist, dessen Innendurchmesser kleiner als der Außendurchmesser der Schraube (6) ist und durch den die Ausgleichsbuchse (10; 10') durch Reibschluss mit der Schraube (6) verbindbar ist, wohingegen sie bei Überwindung des Reibschlusses relativ zur Schraube (6) drehbar ist,
so dass die Schraube (6), wenn sie in die Ausgleichsbuchse eingesteckt und gedreht wird, die Ausgleichsbuchse (10; 10') durch Reibschluss mitdreht und hierdurch entgegen der Einsteckrichtung aus der Mutter (8) zwecks Toleranzausgleich herausschraubt und, wenn sich die Ausgleichsbuchse (10; 10') an das erste Bauteil (2) angelegt hat, mit einem Innengewinde (20, 20') der ersten Gangrichtung zum Verspannen der beiden Bauteile (2, 4) verschraubbar ist,
**dadurch gekennzeichnet,**
**dass** der Klemmabschnitt (28; 28') federnde Finger (30) aufweist, die durch axiale Schlitze (32) in der Ausgleichsbuchse (10; 10') gebildet sind.

2. Toleranzausgleichsanordnung nach Anspruch 1, **dadurch gekennzeichnet, dass** die Mutter (8) zusätzlich zu einem ersten Gewindeabschnitt (17), an dem das Innengewinde (18) der zweiten Gangrichtung vorgesehen ist, einen zweiten Gewindeabschnitt (19) hat, an dem das Innengewinde (20) der ersten Gangrichtung zum Verspannen der beiden Bauteile (2, 4) vorgesehen ist.

3. Toleranzausgleichsanordnung nach Anspruch 2, **dadurch gekennzeichnet dass** die Bohrung (24) der Ausgleichsbuchse (10) glatt ausgebildet ist.

4. Toleranzausgleichsanordnung nach Anspruch 1, **dadurch gekennzeichnet, dass** die Bohrung (24') der Ausgleichsbuchse (10') mit dem Innengewinde (20') der ersten Gangrichtung versehen ist, mit dem die Schraube (6) zum Verspannen der beiden Bauteile (2, 4) verschraubbar ist.

5. Toleranzausgleichsanordnung nach Anspruch 4, **dadurch gekennzeichnet, dass** das Innengewinde (20') der Ausgleichbuchse (10') im Bereich des Klemmabschnittes (26) einen kleineren Gewindedurchmesser als im übrigen Teil des Innengewindes (20') hat.

6. Toleranzausgleichsanordnung nach einem der vorhergehenden Ansprüche, **dadurch gekennzeichnet, dass** die Ausgleichsbuchse (10; 10') an einem Ende einen Flansch (22) hat, mit dem es im montierten Zustand an dem ersten Bauteil (2) anliegt.

7. Toleranzausgleichsanordnung nach einem der vorhergehenden Ansprüche, **dadurch gekennzeichnet, dass** die Mutter (8; 8') als Blindnietmutter ausgebildet ist.

8. Toleranzausgleichsanordnung nach einem der Ansprüche 1 bis 5, **dadurch gekennzeichnet, dass** die Mutter (8, 2') als Schweißmutter ausgebildet ist, die an dem zweiten Bauteil (4) angeschweißt ist.

9. Toleranzausgleichsanordnung nach einem der Ansprüche 1 bis 5, **dadurch gekennzeichnet, dass** die Mutter (8, 2') mit dem zweiten Bauteil (4) einstückig ausgebildet ist.

10. Toleranzausgleichsanordnung nach einem der vorhergehenden Ansprüche, **dadurch gekennzeichnet, dass** der Kopf (12) der Schraube (6) über eine Beilagscheibe (11) an dem ersten Bauteil (2) abgestützt ist.

## Claims

1. Tolerance compensating arrangement for automatically compensating variations of a spacing (A) between first and second structural members (2, 4) due to manufacturing and/or mounting tolerances, comprising:
a bolt (6) having external threads (14) of a first spiral direction, being adapted to extend through the two structural members (2, 4), and having a head (12) adapted to be supported against the first structural member (2),
a nut (8; 8'; 8"; 8''') having internal threads of an opposite second spiral direction and fixedly connected to the second structural member (4), and
a compensation sleeve (10; 10') having a through-bore (24), external threads (26) of the second spiral direction and mating to the internal threads (18) of the nut, and a clamping portion (28) formed as a resiliently expandable spring portion the internal diameter of which is smaller than the outer diameter of the bolt, and through which the compensation sleeve (10; 10') is adapted to be connected to the bolt (6) by frictional drag, whereas it is rotatable relative to the bolt (6) when the frictional drag has been overcome,
such that the bolt (6) when being inserted in the compensation sleeve and being rotated causes the compensation sleeve (10; 10') to rotate due to the frictional drag so as to be threaded from the nut (8) in a direction opposite to the insertion direction for tolerance compensation, and the bolt when the compensation sleeve will have engaged the first structural member (2) is adapted to threadingly engage internal threads (20, 20') of the first spiral direction for clamping the two structural members (2, 4) together,
**characterized in that**
the clamping portion (28; 28') comprises resilient fingers (30) defined by axial slots (32) in the compensation sleeve (10; 10').

2. Tolerance compensation arrangement according to claim 1, **characterized in that** the nut (8) has, additional to a first threaded portion (17) which includes the internal threads (18) of the second spiral direction, a second threaded portion (19) which includes the internal threads (20) of the first spiral direction for clamping the two structural members (2, 4) together.

3. Tolerance compensation arrangement according to claim 2, **characterized in that** the bore (24) of the compensation sleeve (10) is formed to be smooth.

4. Tolerance compensation arrangement according to claim 1, **characterized in that** the bore (24') of the compensation sleeve (10') is provided with the internal threads (20') of the first spiral direction adapted to be threadingly engaged by the bolt (6) for clamping the two structural members (2, 4) together.

5. Tolerance compensation arrangement according to claim 4, **characterized in that** the internal threads (20') of the compensation sleeve (10') are, in the area of the clamping portion (26), of a pitch diameter which is smaller than in the remaining area of the internal threads (20').

6. Tolerance compensation arrangement according to any of the preceding claims, **characterized in that** the compensation sleeve (10; 10') has an end provided with a flange (22) engaging the first structural member (2) in the assembled condition.

7. Tolerance compensation arrangement according to any of the preceding claims, **characterized in that** the nut (8; 8') is a blind rivet nut.

8. Tolerance compensation arrangement according to any of claims 1 to 5, **characterized in that** the nut (8, 2') is a weld nut welded to the second structural member (4).

9. Tolerance compensation arrangement according to any of claims 1 to 5, **characterized in that** the nut (8, 2') is integral with the second structural member (4).

10. Tolerance compensation arrangement according to any of the preceding claims, **characterized in that** the head (12) of the bolt (6) is supported against the first structural member (2) via a washer (11).

## Revendications

1. Dispositif de compensation de tolérance pour la compensation automatique de tolérances liées à la fabrication et/ou au montage de la distance (A) entre un premier et un second élément de construction (2, 4) avec
une vis (6) avec un filet extérieur (14) d'une première direction de pas qui peut être enfoncée à travers les deux éléments de construction (2, 4) et qui peut s'appuyer avec sa tête (12) sur le premier élément de construction (2),
un écrou (8 ; 8' ; 8" ; 8"') avec un filet intérieur (18) d'une seconde direction de pas opposée qui est reliée fixement au second élément de construction (4),
et
une douille de compensation (10 ; 10') qui comporte un alésage traversant (24), un filet extérieur (26) de la seconde direction de pas adapté au filet intérieur (18) de l'écrou ainsi qu'un tronçon de serrage (28), qui est réalisé sous la forme d'un segment de ressort élargissable élastiquement dont le diamètre intérieur est plus petit que le diamètre extérieur de la vis (6) et grâce auquel la douille de compensation (10 ; 10') peut être reliée à la vis (6) par engagement par friction, mais, par contre, peut tourner par rapport à la vis (6) lorsque l'engagement par friction est surmonté,
de sorte que la vis (6), lorsqu'elle est enfoncée et tournée dans la douille de compensation, entraîne en rotation la douille de compensation (10 ; 10') par engagement par friction et, de ce fait, se dévisse hors de l'écrou (8) dans le sens inverse du sens d'enfoncement de manière à compenser les tolérances et, une fois que la douille de compensation (10 ; 10') s'est appuyée sur le premier élément de construction (2), elle peut être vissée avec un filet intérieur (20, 20') de la première direction de pas pour serrer les deux éléments de construction (2, 4),
**caractérisé en ce que**
le tronçon de serrage (28 ; 28') comporte des doigts élastiques (30) qui sont formés par des fentes axiales (32) dans la douille de compensation (10 ; 10').

2. Dispositif de compensation de tolérance selon la revendication 1, **caractérisé en ce que** l'écrou (8) comporte, en plus d'un premier tronçon de filet (17) sur lequel est prévu le filet intérieur (18) de la seconde direction de pas, un second tronçon de filet (19) sur lequel est prévu le filet intérieur (20) de la première direction de pas pour serrer les deux éléments de construction (2, 4).

3. Dispositif de compensation de tolérance selon la revendication 2, **caractérisé en ce que** l'alésage (24) de la douille de compensation (10) est lisse.

4. Dispositif de compensation de tolérance selon la revendication 1, **caractérisé en ce que** l'alésage (24') de la douille de compensation (10') est muni du filet intérieur (20') de la première direction de pas, avec lequel la vis (6) peut être vissée pour serrer les deux éléments de construction (2, 4).

5. Dispositif de compensation de tolérance selon la revendication 4, **caractérisé en ce que** le filet intérieur (20') de la douille de compensation (10') dans la zone du tronçon de serrage (26) a un diamètre de filet plus petit que dans la partie restante du filet intérieur (20').

6. Dispositif de compensation de tolérance selon l'une des revendications précédentes, **caractérisé en ce que** la douille de compensation (10 ; 10') comporte une bride (22) à une extrémité avec laquelle elle s'appuie, à l'état monté, sur le premier élément de construction (2).

7. Dispositif de compensation de tolérance selon l'une quelconque des revendications précédentes, **caractérisé en ce que** l'écrou (8, 8') est réalisé sous la forme d'un écrou à rivet aveugle.

8. Dispositif de compensation de tolérance selon l'une quelconque des revendications 1 à 5, **caractérisé en ce que** l'écrou (8, 2') est réalisé sous la forme d'un écrou à souder qui est soudé sur le second élément de construction (4).

9. Dispositif de compensation de tolérance selon l'une quelconque des revendications 1 à 5, **caractérisé en ce que** l'écrou (8, 2') est réalisé en une seule pièce avec le second élément de construction (4).

10. Dispositif de compensation de tolérance selon l'une quelconque des revendications précédentes, **caractérisé en ce que** la tête (12) de la vis (6) s'appuie sur le premier élément de construction (2) par l'intermédiaire d'une rondelle de calage (11).
